# EUROPÄISCHE PATENTANMELDUNG

(11) **EP 3 786 027 A1**
(43) Veröffentlichungstag der Anmeldung: **03.03.2021**
(21) Anmeldenummer: 19193731.7
(22) Anmeldetag: 27.08.2019
(51) Int. Cl.: B61L 15/00, B61L 23/12, B61L 23/24, B61L 23/26, H04L 9/00, H04L 9/32

(54) **BETRIEBSVERFAHREN VON FAHRZEUGEN IN EINEM FAHRBEREICH**

(71) Anmelder: Siemens Mobility GmbH, 81739 München (DE)
(72) Erfinder: Braband, Jens, 38106 Braunschweig (DE)

(57) **Zusammenfassung**

In einer Ausführungsform ist das Betriebsverfahren für Fahrzeuge (2) Blockchain-basiert und umfasst die Schritte:
A) Auflisten aller aktiven Teilnehmer (1) eines Fahrbereichs (11), wobei mindestens einige Teilnehmer Fahrzeuge (2) sind,
B) Vornehmen einer Transaktion (30) und Verteilen einer zugehörigen Transaktionsinformation (3) durch jeden Teilnehmer an alle anderen Teilnehmer,
C) Prüfen, ob jeder Teilnehmer alle Transaktionsinformationen (3) empfangen hat,
D) Überprüfen der erhaltenen Transaktionsinformationen (3) und entscheiden, ob und welche der erhaltenen Transaktionsinformationen (3) von dem betreffenden Teilnehmer zu berücksichtigen sind,
E) Berechnen eines Datenblocks (5) anhand der zu berücksichtigenden Transaktionsinformationen (3) durch jeden Teilnehmer,
F) Übermitteln des Datenblocks (5) durch einen der Teilnehmer an alle anderen Teilnehmer, und
G) Versenden von Rückmeldungen (7) durch alle anderen Teilnehmer an den Teilnehmer, der den Datenblock (5) übermittelt hat,
wobei die Schritte B) bis G) fortlaufend wiederholt werden.

## Beschreibung

Die Anmeldung betrifft ein Verfahren zum Betreiben von Fahrzeugen in einem Fahrbereich. Darüber hinaus betrifft die Anmeldung ein System zur Kontrolle eines Fahrbereichs für ein solches Verfahren und ein Fahrzeug für ein solches Verfahren.

Die Druckschrift DE 10 2015 218 987 A1 betrifft ein Sicherungsverfahren für ein Gleisstreckennetz.

Eine zu lösende Aufgabe liegt darin, ein Verfahren anzugeben, mit dem ein Fahrbereich, in dem mehrere Fahrzeuge verkehren, effizient und sicher betreibbar ist. Weitere zu lösende Aufgaben liegen darin, ein System und ein Fahrzeug für ein solches Verfahren anzugeben.

Diese Aufgaben werden unter anderem durch ein Verfahren, durch ein System und durch ein Fahrzeug mit den Merkmalen der unabhängigen Ansprüche gelöst. Bevorzugte Weiterbildungen sind Gegenstand der übrigen Ansprüche.

In einer Ausführungsform ist das Verfahren zum Betreiben von Fahrzeugen, insbesondere von Zügen, in einem Fahrbereich mit Fahrbereichskomponenten eingerichtet und umfasst die Schritte:
A) Auflisten aller aktiven Teilnehmer des Fahrbereichs, wobei der Fahrbereich bevorzugt ein Schienennetz ist und wobei mindestens zwei der Teilnehmer ein Fahrzeug sind,
B) Vornehmen einer Transaktion und Verteilen einer zugehörigen Transaktionsinformation durch jeden der Teilnehmer an alle anderen Teilnehmer, wobei die Transaktionen zum Beispiel ein Befahren eines Streckenabschnitts und ein Stellen einer Weiche sind,
C) Prüfen, ob jeder Teilnehmer von allen anderen Teilnehmern eine Transaktionsinformation empfangen hat,
D) Überprüfen der erhaltenen Transaktionsinformationen durch jeden der Teilnehmer und entscheiden, ob und welche der erhaltenen Transaktionsinformationen von dem betreffenden Teilnehmer zu berücksichtigen sind,
E) Berechnen eines bevorzugt Blockchain-basierten Datenblocks anhand der zu berücksichtigenden Transaktionsinformationen durch jeden der Teilnehmer,
F) Übermitteln des Datenblocks durch mindestens einen der Teilnehmer an alle anderen Teilnehmer, insbesondere durch denjenigen Teilnehmer, der mit der Berechnung des Datenblocks zuerst fertig ist, und
G) Versenden von Rückmeldungen durch alle anderen Teilnehmer an den mindestens einen Teilnehmer, der den Datenblock übermittelt hat,
wobei mindestens die Schritte B) bis G) fortlaufend in der angegebenen Reihenfolge wiederholt werden.

Mit dem hier beschriebenen Verfahren wird insbesondere ein erlaubnisbasiertes Schienennetzkontrollsystem mit einer Blockkette, englisch Blockchain, betrieben.

Eisenbahnbetreiber, wie die Deutsche Bahn, versuchen, mit DLT-Technologien Sicherungstechnik einzusparen und zu dezentralisieren. DLT steht dabei für Distributed Ledger Technologie, übersetzt Technik verteilter Kassenbücher. Im Falle eines Hackerangriffs kann die Auditierbarkeit wichtig sein. Dazu scheint auf den ersten Blick Blockchain eine geeignete Methode zu sein. Blockchain-Methoden sind jedoch für Sicherungsanlagen in Reinform, zum Beispiel wie bei Bitcoin oder Ethereum, nicht geeignet:
- So können für eine gewisse Zeit unterschiedliche Ketten in Teilnetzen bestehen. Dies entspricht unterschiedlichen Zuständen des Sicherungssystems. Zwar synchronisieren sich die Zustände nach kurzer Zeit, es ist aber inakzeptabel, dass ein Teil des Netzwerks zum Beispiel einen Gleisabschnitt als frei annimmt, während der Rest des Netzwerks ihn als besetzt ansieht.
- Die verwendeten Authentifizierungsalgorithmen sind nicht echtzeitfähig, das heißt, die Skalierbarkeit insbesondere für größere Systeme ist nicht gegeben.
- Es ist ein hoher, inakzeptabler Energieverbrauch nötig.

Anstatt ein reines Blockchain-System echtzeitfähig zu machen, wird vorliegend andersherum vorgeschlagen, die Anwendung derart zu konzeptionieren, sodass diese Eigenschaft nicht vonnöten ist, wobei bevorzugt DLT-Technologien angewendet werden.

Ein beispielhafter Anwendungsfall sind erlaubnisbasierte Sicherungssysteme, englisch possession-based safety systems. In diesem Fall gehört jede Streckensicherungselement zu jedem Zeitpunkt eindeutig einem Anwender. Das heißt, das Sicherungselement wird durch einen eindeutigen elektronischen Erlaubnisschein, englisch Token, identifiziert. Wer dieses Token besitzt, darf bestimmen, was mit dem entsprechenden Element zu tun ist oder wer es benutzen darf.

Ein Beispiel ist ein Token-Block-System für Gegenfahrtschutz auf eingleisigen Strecken. Wer das Token für eine bestimmte Weiche besitzt, darf ihre Richtung festlegen, sie umlaufen lassen und so weiter. Ähnliches gilt für Streckenelemente wie Gleisabschnitte oder Bahnübergänge. Nur, wer das zugehörige Token besitzt, darf den betreffenden Gleisabschnitt oder Bahnübergang befahren.

Im Detail kann es mehr als ein Token mit unterschiedlicher Bedeutung für jedes Element geben, zum Beispiel kann ein Token bedeuten, dass man eine Weiche befahren darf, ein anderes Token, dass man die Weiche verstellen darf. Dies ist zum Beispiel beim sogenannten Flankenschutz relevant, wenn man die Weiche festlegen, aber nicht befahren will.

Betrieblich läuft das hier beschriebene Verfahren insbesondere wie folgt ab: Ein Verkehrsmanagementsystem, englisch Traffic Management System oder kurz TMS, teilt den Zügen Fahrwege zu. Wenn ein Zug einen Fahrweg befahren will, fordert der Zug von den befahrenen oder beteiligten Fahrwegelementen die entsprechenden Token an. Ist er im Besitz aller Token, so darf der Zug die beanspruchten Elemente seinem Fahrweg entsprechend verstellen und nutzen. Die Elemente akzeptieren Kommandos nur von Zügen, die über die betreffenden Token verfügen. Hat der Zug ein Element befahren oder braucht es nicht mehr, gibt er einfach sein Token zurück, insbesondere an das betreffende Element.

Zum Beispiel möchte ein Zug eine Weiche W1 befahren. Dazu braucht der Zug Gleisabschnitte G1 und G3. Besitzt der Zug alle Token für die Elemente W1, G1 und G3, so kann der Zug die Weiche W1 entsprechend stellen und den Weg befahren. Will der Zug sich noch gegen Flankenfahrten eines weiteren Zugs absichern, könnte er auch noch einen weiteren Gleisabschnitt G2 an einem dritten Ast der Weiche W1 anfordern. Der weitere Zug dürfte in diesem Fall nicht in den Gleisabschnitt G2 einfahren, da er G2 nicht besitzt, also den zugehörigen Token nicht hat. Das heißt, im Vergleich zu einem System, wie in der Druckschrift DE 10 2015 218 987 A1 angegeben, entscheidet bei dem hier beschriebenen Verfahren nicht ein Streckenelement, ob der Zug fahren darf, sondern der Zug selbst. Das Streckenelement nimmt alle Befehle des Zuges an, der die entsprechenden Erlaubnisscheine, also Token, besitzt.

Dieses Betriebsverfahren ist DLT-affin, denn es entspricht im Prinzip der Aufgabe eines Notars. In der Blockchain werden in jeder Runde alle Aufträge entsprechend der Anwendungslogik bearbeitet und die Token wechseln ihre Besitzer. Dies ist mit jeder Blockchain implementierbar, die entsprechende Bedingungen, insbesondere Smart Contracts, unterstützt, die einen Besitzstand verwalten können. Eine Fahrstraßenlogik des Fahrbereichs muss dabei nicht in der Blockchain implementiert werden, sondern wird bevorzugt auf jedem Fahrzeug selbst geprüft.

Um eine Finalität zu erzwingen, das heißt, dass sich alle Teilnehmer jederzeit auf denselben Zustand einigen, müssen alle Teilnehmer bekannt sein und alle Teilnehmer müssen in jeder Runde eine Transaktion durchführen. Falls keine Transaktion vorliegt, so muss eine Leertransaktion vorgenommen werden, das heißt, der betreffende Teilnehmer erklärt aktiv, dass er keine Transaktion in der nächsten Runde vornehmen will. Durch die bekannte Anzahl von Teilnehmern kann man eine Rückkopplung einbauen. Das heißt, wenn ein Teilnehmer einen neuen Datenblock berechnet hat, dann muss er dies allen anderen Teilnehmern mitteilen und alle Teilnehmer dürfen erst nach einer Bestätigung dann ihre neuen Transaktionen verteilen.

Eine Runde des hier beschriebenen Verfahrens sieht besonders bevorzugt wie folgt aus:
a) Alle Teilnehmer verteilen ihre neuen Transaktionen.
b) Jeder Teilnehmer prüft, ob er von jedem anderen Teilnehmer eine Transaktion erhalten hat. Ist dies nicht der Fall, verteilt er eine Fehlernachricht und es geht wieder mit Schritt a) los.
c) Alle Teilnehmer prüfen die erhaltenen Transaktionen und entscheiden anhand der Erlaubnisschein-Logik, welche Transaktionen sie in den neuen Datenblock aufnehmen.
d) Alle Teilnehmer berechnen den neuen Datenblock. Bevorzugt der erste Teilnehmer verteilt den neuen Datenblock und wartet auf alle Rückmeldungen aller anderen Teilnehmer. Bei Kollisionen wird zum Beispiel der Datenblock mit dem früheren Zeitstempel ausgewählt.

Die Schritte a) bis d) werden fortlaufend wiederholt, solange das Betriebsverfahren durchgeführt wird.

Es reicht aus, wenn die Fahrzeuge, also die Züge, aktive Teilnehmer der Blockchain sind. Die Streckenelemente brauchen nur passiv darauf zuzugreifen, zum Beispiel um nachzuprüfen, dass das Fahrzeug, das etwas anfordert, auch über die entsprechenden Rechte verfügt.

Dieses Vorgehen ist unabhängig von der verwendeten Blockchain.

Das hier beschriebene Verfahren hält keine harten Echtzeitanforderungen ein, sondern nur mittlere Zykluszeiten. Allerdings ist die Verzögerung beim Anfordern von Erlaubnisscheinen, also Token, von den Elementen nicht sicherheitsrelevant, da das Gesamtsystem immer in einem sicheren Zustand ist.

Ein Aspekt des hier beschriebenen Verfahrens liegt somit in der Aufteilung der Verantwortung der Einhaltung der Fahrstraßenlogik auf die Fahrzeuge sowie der Belegungslogik und Erlaubnisschein-Logik in der Blockchain auf alle Elemente, bei gleichzeitiger Erzwingung der Finalität.

Ein Vorteil dieses Verfahrens liegt darin, dass jederzeit ein abgestimmter Zustand bei allen Teilnehmern vorhanden ist und dass das Verfahren unabhängig von der verwendeten Blockchain ist. Die Blockchain muss nur minimale Funktionen bieten, wie zum Beispiel ein einfaches Ledger für einen Notar.

Dieses Verfahren bietet sich vor allem für begrenzte Regionalstrecken oder Inselnetze an.

Gemäß zumindest einer Ausführungsform ist der Fahrbereich ein Schienennetz oder umfasst ein Schienennetz. Beispielsweise ist der Fahrbereich für mindestens zwei oder vier Fahrzeuge eingerichtet, die zur gleichen Zeit betrieben werden. Alternativ oder zusätzlich ist der Fahrbereich für höchstens 20 oder zwölf oder acht gleichzeitig betriebene Fahrzeuge eingerichtet. Zum Beispiel umfasst das Schienennetz mindestens fünf oder 15 oder 50 und/oder höchstens 1000 oder 200 oder 80 einzelne Gleisabschnitte.

Gemäß zumindest einer Ausführungsform sind die Fahrzeuge Schienenfahrzeuge, insbesondere Personenzüge.

Gemäß zumindest einer Ausführungsform sind mindestens einige oder alle der Fahrbereichskomponenten je durch eine oder mehrere der folgenden Elemente gebildet: Weiche, Bahnübergang, Stellwerk, Signal, Streckenabschnitt. Insofern können die Begriffe Fahrbereichskomponente und Element der Fahrstrecke synonym verwendet werden.

Gemäß zumindest einer Ausführungsform sind jeder der Fahrbereichskomponenten je eine oder mehrere Komponentenaktionen zugeordnet. Jeder Komponentenaktion ist besonders bevorzugt genau ein elektronischer Erlaubnisschein, auch als Token bezeichnet, zugeordnet. Zu jedem Zeitpunkt kann jedem Erlaubnisschein bevorzugt höchstens ein Teilnehmer zugeordnet sein. Ist der Erlaubnisschein keinem Teilnehmer zugeordnet, so kann sich der Erlaubnisschein bei der zugeordneten Fahrbereichskomponente befinden.

Gemäß zumindest einer Ausführungsform können die betreffenden Komponentenaktionen an der zugehörigen Fahrbereichskomponente nur durch denjenigen Teilnehmer durchgeführt oder nur von demjenigen Teilnehmer veranlasst werden, der den entsprechenden elektronischen Erlaubnisschein besitzt. Gleichermaßen kann die Fahrbereichskomponente nur von dem Teilnehmer benutzt werden, der über den zugehörigen Erlaubnisschein verfügt.

Gemäß zumindest einer Ausführungsform sind einige oder alle der Komponentenaktionen aus der folgenden Gruppe ausgewählt: Befahrerlaubnis eines Streckenabschnitts; Einstellerlaubnis einer Weiche, eines Bahnübergangs, eines Signals, eines Stellwerks, eines Riegels und/oder einer Gleissperre.

Gemäß zumindest einer Ausführungsform sind die Transaktionen entweder je mindestens eine der Komponentenaktionen oder eine Leertransaktion oder umfassen eine der Komponentenaktionen oder eine Leertransaktion. Das heißt, im Falle einer Komponentenaktion wird eine der Fahrbereichskomponenten von dem betreffenden Teilnehmer benutzt und/oder angesteuert. Im Falle einer Leertransaktion erfolgt keine Komponentenaktion durch den betreffenden Teilnehmer und/oder eine Nutzung der Fahrbereichskomponenten durch den betreffenden Teilnehmer ändert sich nicht.

Gemäß zumindest einer Ausführungsform verfügt jeder der Teilnehmer über einen vollständigen Verschlussplan aller Fahrbereichskomponenten des Fahrbereichs.

Das Verschlussplanprinzip basiert auf einer tabellarischen Darstellung der Fahrstraßenlogik zum Beispiel eines Stellwerks. Darin sind die Stellelemente und Überwachungselemente, insbesondere Weichen, Signale und Gleisfreimelder für jede Fahrstraße, aufgeführt.

Insbesondere wird beim Verschlussplan jede Fahrstraße durch eine Zeile einer Matrix abgebildet, wobei die Spalten dieser Matrix durch Fahrwegelemente gebildet werden. Die Felder der Matrix enthalten Informationen darüber, in welcher Stellung sich ein Fahrwegelement für eine bestimmte Fahrstraße befinden muss und welche Bedingungen weiterhin zum Beispiel zum Verschließen einer Fahrstraße erfüllt werden müssen. Der Verschlussplan enthält alle Beteiligten und Bedienhandlungen, die zum Bilden einer Fahrstraße und der Durchführung einer Zugfahrt notwendig sind. Der Verschlussplan führt auf, in welcher Stellung sich zum Beispiel Weichen, Riegel, Gleissperren oder Sperrsignale befinden müssen, um eine Fahrstraße zu bilden und eine Zugfahrt zuzulassen.

Gemäß zumindest einer Ausführungsform wird ein Fahrplan für die Teilnehmerin dem Fahrbereich durch ein Verkehrsmanagementsystem vorgegeben. Dabei können alle Teilnehmer Fahrzeuge sein. Bevorzugt ist das Verkehrsmanagementsystem selbst kein Teilnehmer im Sinne des Betriebsverfahrens.

Gemäß zumindest einer Ausführungsform werden die nacheinander in den Schritten E) berechneten Datenblöcke schrittweise anhand der Transaktionsinformationen aufeinander aufgebaut und kryptographisch miteinander verknüpft. Somit können die Datenblöcke eine Blockchain bilden.

Gemäß zumindest einer Ausführungsform sind bestimmungsgemäß im ordnungsgemäßen Betrieb alle Datenblöcke aller Teilnehmer nach dem jeweiligen Schritt F) gleich. Zutreffendenfalls wird dies im Schritt G) mit den Rückmeldungen bestätigt. Liegt keine Übereinstimmung vor, erfolgt eine Fehlermeldung, optional wird eine Neuinitialisierung des Systems durchgeführt.

Gemäß zumindest einer Ausführungsform sind in den Datenblöcken die zuletzt durchgeführten Transaktionen aller Teilnehmer anhand der Transaktionsinformationen hinterlegt. Beispielsweise kann anhand der Datenblöcke eine Historie der in dem Fahrbereich durchgeführten Aktionen nachvollzogen werden.

Gemäß zumindest einer Ausführungsform reichen die in den Datenblöcken hinterlegten Transaktionen nur eine Maximalzeitspanne zurück. Die Maximalzeitspanne beträgt zum Beispiel mindestens 1 h oder 12 h und/oder höchstens 8 d oder 2 d.

Gemäß zumindest einer Ausführungsform beträgt eine Zykluszeit, in der die Schritte B) bis G) einmal durchlaufen werden, höchstens 5 min oder 1 min oder 30 s oder 10 s. Mit solchen Zykluszeiten lässt sich nahezu ein Echtzeitverhalten auf den für den Fahrbereich relevanten Zeitskalen erzielen.

Darüber hinaus wird ein System für ein Verfahren, wie oben beschrieben, angegeben. Merkmale des Systems sind daher auch für das Verfahren offenbart und umgekehrt.

In mindestens einer Ausführungsform umfasst das System:
- den Fahrbereich,
- mehrere der Fahrbereichskomponenten,
- mehrere der Fahrzeuge, und
- mindestens eine Kommunikationseinrichtung für eine Kommunikation zwischen allen Teilnehmern und bevorzugt auch zwischen den Teilnehmern und den Fahrbereichskomponenten sowie optional zwischen den Fahrbereichskomponenten untereinander.

Die Kommunikationseinrichtung stellt insbesondere eine Funkverbindung zwischen den Teilnehmern, den Fahrbereichskomponenten und/oder dem Verkehrsmanagementsystem sowie optional Bedienpersonal her. Die Teilnehmer, die Fahrbereichskomponenten und/oder das Verkehrsmanagementsystem sowie optional das Bedienpersonal verfügen demgemäß über Kommunikationseinheiten, um die Kommunikation zu ermöglichen.

Darüber hinaus wird ein Fahrzeug für ein Verfahren, wie oben beschrieben, angegeben. Merkmale des Fahrzeugs sind daher auch für das Verfahren offenbart und umgekehrt.

In mindestens einer Ausführungsform umfasst das Fahrzeug:
- eine Kommunikationseinheit zum Vornehmen oder Veranlassen der Transaktionen, zum Senden und Empfangen der Transaktionsinformationen, zum Übermitteln und Empfangen der Datenblöcke und zum Versenden und Empfangen der Rückmeldungen, wobei die Kommunikationseinheit insbesondere für eine Funkverbindung eingerichtet ist, und
- eine Prozessoreinheit zum Überprüfen der erhaltenen Transaktionsinformationen und zum Berechnen der Datenblöcke.

Die oben genannten Eigenschaften, Merkmale und Vorteile der Erfindung und die Art und Weise, wie diese erreicht werden, werden durch die folgende Beschreibung der Ausführungsbeispiele der Erfindung in Verbindung mit den entsprechenden Figuren weitergehend erläutert, wobei
- Figur 1: eine schematische Darstellung eines Systems mit mehreren Fahrzeugen für ein hier beschriebenes Verfahren zeigt,
- Figur 2: ein Blockdiagramm eines hier beschriebenen Verfahrens zeigt, und
- Figur 3: ein schematisches Ablaufdiagramm eines hier beschriebenen Verfahrens zeigt.

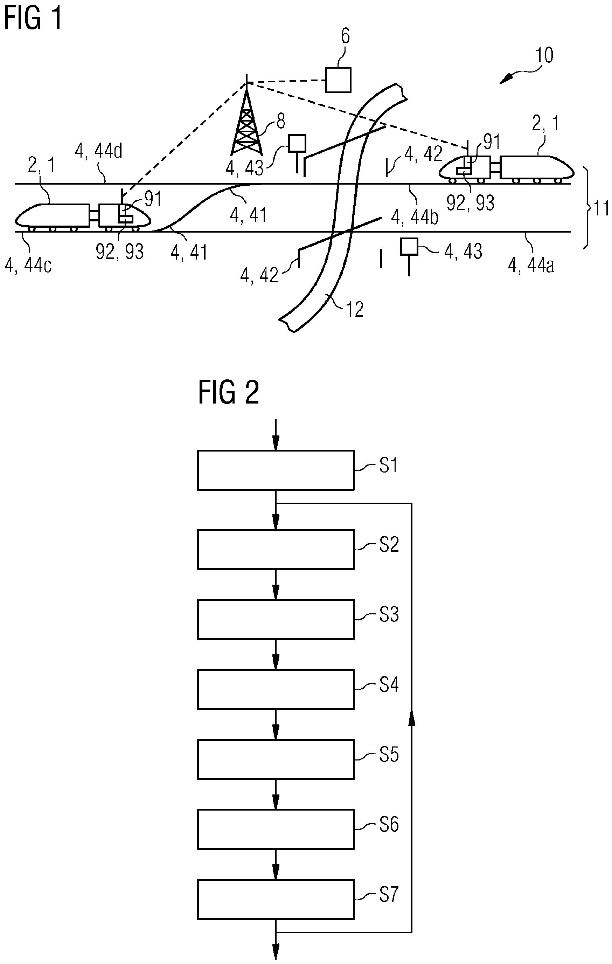

In Figur 1 ist schematisch ein System 10 gezeigt. Das System 10 umfasst einen Fahrbereich 11, gebildet durch ein Schienennetz, zum Beispiel ein Inselnetz. In dem Fahrbereich 11 verkehren mehrere Fahrzeuge 2, die Züge sind. Der Fahrbereich 11 umfasst zudem mehrere Fahrbereichskomponenten 4, zum Beispiel Weichen 41, einen Bahnübergang 42, Signale 43, Streckenabschnitte 44a-d und/oder ein nicht gezeichnetes Stellwerk.

Der Fahrbereich 11 ist an ein Verkehrsmanagementsystem 6 des Systems 10 angebunden. Außerdem verfügt das System 10 über eine Kommunikationseinrichtung 8. Mittels der Kommunikationseinrichtung 8 wird eine Funkverbindung zwischen den Fahrzeugen 2, den Fahrbereichskomponenten 4 und bevorzugt auch dem Verkehrsmanagementsystem 6 etabliert.

Zur Kommunikation verfügen die Fahrzeuge 2 je über eine Kommunikationseinheit 91, insbesondere über eine Funkanlage. Außerdem umfassen die Fahrzeuge 2 je eine Prozessoreinheit 92, die zum Beispiel in einem Bordrechner untergebracht ist und die optional redundant ausgelegt ist. Auch die Fahrbereichskomponenten 4 verfügen bevorzugt je über ein Kommunikationseinheit und über eine Prozessoreinheit, nicht dargestellt.

Zudem verfügt jedes Fahrzeug 2 und damit jeder Teilnehmer 1 über einen Verschlussplan 93 für den gesamten Fahrbereich 11. Der Verschlussplan 93 legt fest, welche Fahrbereichskomponenten 4 wie eingestellt werden müssen, um sichere Fahrstrecken für die Fahrzeuge 2 zu gewährleisten. Eine Prüfung, ob eine sichere Fahrstrecke gegeben ist, und eine dem gemäße Einstellung der Fahrbereichskomponenten 4, erfolgt durch jedes Fahrzeug 2 anhand des Verschlussplans 93.

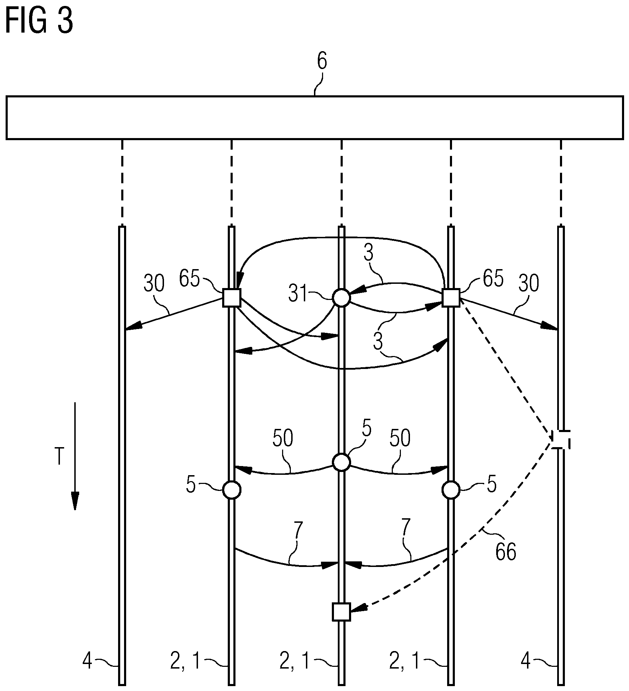

Ein Betriebsverfahren für das System 10 und damit für die Fahrzeuge 2 ist in den Figuren 2 und 3 veranschaulicht.

In einem ersten Verfahrensschritt S1, siehe Figur 2, erfolgt ein Feststellen und Auflisten aller Teilnehmer 1, die in dem Fahrbereich 11 aktiv sind. Dies sind insbesondere alle Fahrzeuge 2, die sich in dem Fahrbereich 11 bewegen oder bewegen wollen. Der Verfahrensschritt S1 wird insbesondere von dem Verkehrsmanagementsystem 6 koordiniert. Dabei sind das Verkehrsmanagementsystem 6 und die Fahrbereichskomponenten 4 bevorzugt keine Teilnehmer 1 im Sinne des Betriebsverfahrens.

Im Verfahrensschritt S2 der Figur 2 wird von jedem Teilnehmer eine Transaktion 30 in Form einer Komponentenaktion oder einer Leertransaktion 31 vorgenommen. In den Transaktionen 30 bewirkt das agierende Fahrzeug 2 im Falle einer Komponentenaktion eine Einstellungsänderung der betreffenden Fahrbereichskomponente 4, zum Beispiel der Weiche 41, oder nutzt eine der Fahrbereichskomponenten 4, zum Beispiel einen der Streckenabschnitte 44a-d.

In dem in Figur 3 lediglich schematisch veranschaulichten Ablauf in der Zeit T ist illustriert, dass die Transaktionen 30, insbesondere die Komponentenaktionen, nur dann möglich sind, wenn das betreffende Fahrzeug 2 über einen elektronischen Erlaubnisschein 65, englisch Token, verfügt. Das heißt, beispielsweise die Weiche 41 kann von einem Fahrzeug 2 und Teilnehmer 1 nur dann gestellt, werden, wenn dieses Fahrzeug 2 über den zugehörigen Erlaubnisschein 65 verfügt. In gleicher Weise darf ein Fahrzeug 2 einen der Streckenabschnitte 44a-d nur dann befahren, wenn dieses Fahrzeug 2 im Besitz des entsprechenden Erlaubnisscheins 65 ist.

Im Verfahrensschritt S2 der Figur 2 erfolgt außerdem ein Verteilen von Transaktionsinformationen 3 zu den jeweiligen Transaktionen 30 durch jeden der Teilnehmer 1 an alle anderen Teilnehmer 1, also zum Beispiel von jedem der Fahrzeuge 2 an alle anderen Fahrzeuge 2. Dies ist in Figur 3 durch geschweifte Pfeile symbolisiert.

Im Verfahrensschritt S3 der Figur 2 wird geprüft, ob jeder Teilnehmer 1, 2 von allen anderen Teilnehmern 1, 2 eine Transaktionsinformation 3 empfangen hat.

Im Verfahrensschritt S4 der Figur 2 wird durch jeden Teilnehmer 1, 2 dann nach festgelegten Regeln entscheiden, ob und welche der erhaltenen Transaktionsinformationen 3 von den Teilnehmern 1, 2 zu berücksichtigen sind. Beispielsweise werden Transaktionsinformationen 3 über Leertransaktionen 31 nicht berücksichtigt.

Im Verfahrensschritt S5 der Figur 2 erfolgt ein Berechnen von Blockchain-basierten Datenblöcken 5 anhand der zu berücksichtigenden Transaktionsinformationen 3 durch jeden der Teilnehmer 1, 2. Zeitlich aufeinanderfolgende Datenblöcke 5 sind bevorzugt miteinander verknüpft und kryptographisch gesichert.

Im Verfahrensschritt S6 der Figur 2 erfolgt ein Übermitteln des ersten fertig berechneten Datenblocks 5 durch den betreffenden Teilnehmer 1, 2 an alle anderen Teilnehmer 1, 2. Auch dieser Schritt ist in Figur 3 veranschaulicht.

Im Verfahrensschritt S7 der Figur 2 werden Rückmeldungen 7 durch alle Teilnehmer 1, 2 an denjenigen Teilnehmer 1, 2 gesandt, von dem der Datenblock 5 übermittelt wurde. Außerdem wird in diesem Schritt bevorzugt überprüft, ob der übermittelte Datenblock 5 mit dem selbst berechneten Datenblock 5 übereinstimmt. Bestimmungsgemäß ist dies der Fall. Falls nicht, ergeht eine Fehlermeldung und das Verfahren bricht ab und beginnt neu im Schritt S2. Das Senden der Rückmeldungen 7 ist in Figur 3 schematisch illustriert.

Die Verfahrensschritte S2 bis S7 werden fortlaufend durchgeführt. Bedarfsweise wird auch der Schritt S1 erneut durchgeführt.

Aus den Datenblöcken 5 lässt sich bevorzugt auf vergangene Transaktionsinformationen 3 schließen. Dabei ist es möglich, um eine Komplexität gering zu halten, dass nur Transaktionsinformationen 3 aus einem bestimmten, nicht zu langen Zeitintervall oder nur bis zu einer bestimmten Zyklenzahl beibehalten werden.

Ferner ist in Figur 3 gezeigt, dass die Erlaubnisscheine 65 übertragen werden, wenn sie von dem betreffenden Teilnehmer 1, 2 nicht mehr benötigt werden. Dies kann anhand von Nachrichten für Erlaubnisscheinübertragungen 66 durchgeführt werden. Das Übertragen erfolgt bevorzugt indirekt über die zugeordnete Fahrbereichskomponente 4, kann alternativ aber auch direkt zwischen den Teilnehmern 1, 2 abgewickelt werden oder unter Zuhilfenahme des Verkehrsmanagementsystems 6.

Obwohl die Erfindung anhand von Ausführungsbeispielen detailliert dargestellt und beschrieben wurde, ist die Erfindung nicht auf die offenbarten Ausführungsbeispiele und die darin erläuterten konkreten Merkmalskombinationen beschränkt. Weitere Variationen der Erfindung können von einem Fachmann erhalten werden, ohne den Schutzumfang der beanspruchten Erfindung zu verlassen.

### Bezugszeichenliste

- 1: Teilnehmer
- 2: Fahrzeug
- 3: Transaktionsinformation
- 30: Transaktion
- 31: Leertransaktion
- 4: Fahrbereichskomponente
- 41: Weiche
- 42: Bahnübergang
- 43: Signal
- 44...: Streckenabschnitt
- 5: Datenblock
- 50: Datenblocknachricht
- 6: Verkehrsmanagementsystem
- 65: Erlaubnisschein
- 66: Erlaubnisscheinübertragung
- 7: Rückmeldung
- 8: Kommunikationseinrichtung
- 91: Kommunikationseinheit
- 92: Prozessoreinheit
- 93: Verschlussplan
- 10: System
- 11: Fahrbereich
- 12: Straße
- S...: Verfahrensschritt
- T: Zeit

## Patentansprüche

1. Betriebsverfahren für Fahrzeuge (2) in einem Fahrbereich (11) mit Fahrbereichskomponenten (4, 41, 42, 43, 44), umfassend die Schritte:
A) Auflisten aller aktiven Teilnehmer (1) des Fahrbereichs (11), wobei mindestens zwei der Teilnehmer (1) je durch eines der Fahrzeuge (2) gebildet sind,
B) Vornehmen einer Transaktion (30) und Verteilen einer zugehörigen Transaktionsinformation (3) durch jeden der Teilnehmer (1) an alle anderen Teilnehmer (1),
C) Prüfen, ob jeder Teilnehmer (1) von allen anderen Teilnehmern (1) eine Transaktionsinformation (3) empfangen hat,
D) Überprüfen der erhaltenen Transaktionsinformationen (3) durch jeden der Teilnehmer (1) und entscheiden, ob und welche der erhaltenen Transaktionsinformationen (3) von dem betreffenden Teilnehmer (1) zu berücksichtigen sind,
E) Berechnen eines Datenblocks (5) anhand der zu berücksichtigenden Transaktionsinformationen (3) durch jeden der Teilnehmer (1),
F) Übermitteln des Datenblocks (5) durch mindestens einen der Teilnehmer (1) an alle anderen Teilnehmer (1), und
G) Versenden von Rückmeldungen (7) durch alle anderen Teilnehmer (1) an den mindestens einen Teilnehmer (1), der den Datenblock (5) übermittelt hat,
wobei mindestens die Schritte B) bis G) fortlaufend in der angegebenen Reihenfolge wiederholt werden.

2. Betriebsverfahren nach dem vorhergehenden Anspruch,
bei dem
- der Fahrbereich (11) ein Schienennetz ist oder umfasst,
- die Fahrzeuge (2) Schienenfahrzeuge sind, und
- die Fahrbereichskomponenten (4, 41, 42, 43, 44) mindestens zum Teil je durch eine oder mehrere der folgenden Elemente gebildet sind: Weiche (41), Bahnübergang (42), Signal (43), Streckenabschnitt (44).

3. Betriebsverfahren nach einem der vorhergehenden Ansprüche, bei dem
- jeder der Fahrbereichskomponenten (4, 41, 42, 43, 44) je mindestens eine Komponentenaktion zugeordnet ist und jeder Komponentenaktion genau ein elektronischer Erlaubnisschein (65) zugeordnet ist,
- die Komponentenaktionen an der jeweils zugehörigen Fahrbereichskomponente (4, 41, 42, 43, 44) nur durch denjenigen Teilnehmer (1) durchgeführt oder nur von demjenigen Teilnehmer (1) veranlasst werden können, der den betreffenden Erlaubnisschein (65) besitzt, und
- zumindest einige der Komponentenaktionen aus der folgenden Gruppe ausgewählt sind: Befahrerlaubnis eines Streckenabschnitts (44), Einstellerlaubnis einer Weiche (41), Einstellerlaubnis eines Bahnübergangs (42).

4. Betriebsverfahren nach dem unmittelbar vorhergehenden Anspruch,
bei dem die Transaktionen (30) entweder je mindestens eine der Komponentenaktionen oder eine Leertransaktion (31) umfassen oder sind, sodass im Falle einer Komponentenaktion eine der Fahrbereichskomponenten (4, 41, 42, 43, 44) von dem betreffenden Teilnehmer (1) benutzt und/oder angesteuert wird und im Falle einer Leertransaktion (31) keine Komponentenaktion erfolgt oder eine Nutzung der Fahrbereichskomponenten (4, 41, 42, 43, 44) sich nicht ändert.

5. Betriebsverfahren nach einem der vorhergehenden Ansprüche,
bei dem jeder der Teilnehmer (1) über einen vollständigen Verschlussplan (93) aller Fahrbereichskomponenten (4, 41, 42, 43, 44) des Fahrbereichs (11) verfügt.

6. Betriebsverfahren nach einem der vorhergehenden Ansprüche,
bei dem ein Fahrplan in dem Fahrbereich (11) für die Teilnehmer (1), welche Fahrzeuge (2) sind, durch ein Verkehrsmanagementsystem (6) vorgegeben wird,
wobei das Verkehrsmanagementsystem (6) kein Teilnehmer (1) ist.

7. Betriebsverfahren nach einem der vorhergehenden Ansprüche,
bei dem die nacheinander in den Schritten E) berechneten Datenblöcke (5) anhand der Transaktionsinformationen (3) aufeinander aufgebaut und kryptographisch miteinander verknüpft werden, sodass die Datenblöcke (5) eine Blockchain bilden, wobei bestimmungsgemäß im ordnungsgemäßen Betrieb alle Datenblöcke (5) aller Teilnehmer (1) nach dem jeweiligen Schritt F) gleich sind und dies zutreffendenfalls im Schritt G) mit den Rückmeldungen (7) bestätigt wird.

8. Betriebsverfahren nach dem unmittelbar vorhergehenden Anspruch,
bei dem in den Datenblöcken (5) die zuletzt durchgeführten Transaktionen (30) aller Teilnehmer (1) anhand der Transaktionsinformationen (3) hinterlegt sind,
wobei die hinterlegten Transaktionen (30) nur eine Maximalzeitspanne zurückreichen und die Maximalzeitspanne mindestens 1 h und höchstens 8 d beträgt.

9. Betriebsverfahren nach einem der vorhergehenden Ansprüche,
bei dem eine Zykluszeit, innerhalb der die Schritte B) bis G) einmal durchlaufen werden, höchstens 5 min beträgt.

10. System (10) zur Kontrolle eines Fahrbereichs (11), das für ein Verfahren nach einem der vorhergehenden Ansprüche eingerichtet ist, umfassend:
- den Fahrbereich (11),
- mehrere der Fahrbereichskomponenten (4, 41, 42, 43, 44),
- mehrere der Fahrzeuge (2), und
- eine Kommunikationseinrichtung (8) für eine Kommunikation zwischen allen Teilnehmern (1).

11. Fahrzeug (2), das für ein Verfahren nach einem der Ansprüche 1 bis 9 eingerichtet ist, umfassend:
- eine Kommunikationseinheit (91) zum Vornehmen oder Veranlassen der Transaktionen (30), zum Senden und Empfangen der Transaktionsinformationen (3), zum Übermitteln und Empfangen der Datenblöcke (5) und zum Versenden und Empfangen der Rückmeldungen (7), und
- eine Prozessoreinheit (92) zum Überprüfen der erhaltenen Transaktionsinformationen (3) und zum Berechnen der Datenblöcke (5).
